# EUROPEAN PATENT SPECIFICATION

(11) **EP 4 566 801 B1**
(45) Date of publication and mention of the grant of the patent: **20.05.2026**
(21) Application number: 24209687.3
(22) Date of filing: 30.10.2024
(51) Int. Cl.: B29C 73/26, B25B 21/00

(54) **POWERED TOOL FOR REPAIRING TIRE**
ANGETRIEBENES WERKZEUG ZUR REPARATUR VON REIFEN
OUTIL MOTORISÉ POUR RÉPARER UN PNEU

(30) Priority: 09.11.2023 TW 112143188
(43) Date of publication of application: 11.06.2025
(73) Proprietor: Basso Industry Corp., 40768 Taichung (TW)
(72) Inventor: LAI, Tian-Chi, 40768 Taichung (TW)
(74) Representative: V.O.

(56) References cited:
- EP-A2- 4 046 752
- US-A1- 2008 265 453
- US-A1- 2022 040 940

## Description

The disclosure relates to a powered tool, and more particularly to a powered tool for repairing a tire.

A conventional tire repair tool disclosed in U.S. Patent Application Publication No. 20220040940 that discloses a powered tool according to the preamble of claim 1 includes an outer casing, a motor mounted to the outer casing, a switch mounted to the outer casing and for activating the motor, a trigger mounted to the outer casing and operable to trigger the switch, an output shaft rotatably mounted to the outer casing for outputting kinetic energy, a transmission gear unit connected between the motor and the output shaft for transmitting kinetic energy, and a mode selector mounted to the outer casing and for changing a gear ratio of the transmission gear unit such that the output shaft rotates at two different rotational output speeds when being switched by the mode selector.

The output shaft may be connected to different tool heads for cleaning, grinding, or polishing a damaged region of a tire to be repaired so a patch may be securely bonded to the damaged region.

In order to provide additional rotational output speeds to the output shaft, the conventional tire repair tool of U.S. Patent Application Publication No. 20220040940 discloses in paragraphs [0034] and [0035] that the rotational output speed of the output shaft may be further controlled by an electronic speed control system. However, since the conventional tire repair tool is usually subjected to vibrations during use, connections among wires and contacts of the electronic speed control system are susceptible to loosen easily, which adversely affect reliability of the conventional tire repair tool.

Therefore, an object of the disclosure is to provide a powered tool that can alleviate at least one of the drawbacks of the prior art.

According to an aspect of the disclosure, there is provided a powered tool for repairing a tire according to claim 1.

Other features and advantages of the disclosure will become apparent in the following detailed description of the embodiment(s) with reference to the accompanying drawings. It is noted that various features may not be drawn to scale.
FIG. 1 is a schematic perspective view of an embodiment of a powered tool according to the present disclosure for repairing a tire.
FIG. 2 is another perspective view of the embodiment seen from an angle different from FIG. 1.
FIG. 3 is fragmentary sectional view of the embodiment, illustrating a speed changing switch of the embodiment at a first rotational speed position, a trigger of the embodiment being not pressed, and a movable gear of the embodiment being at a fixed position.
FIG. 4 is a fragmentary side view of the embodiment, illustrating a mode switching unit of the embodiment connected to the movable gear.
FIG. 5 is a fragmentary sectional view of the embodiment similar to FIG. 3, but illustrates that the trigger presses against a trigger.
FIG. 6 is a fragmentary sectional view of the embodiment similar to FIG. 5, but illustrates that the speed changing switch is at a second rotational speed position.
FIG. 7 is a fragmentary partly enlarged sectional view of the embodiment, illustrating the movable gear being at a rotatable position and the speed changing switch being at the second rotational speed position.
FIG. 8 is a fragmentary sectional view of the embodiment, illustrating a variation of the speed changing switch of the embodiment.
FIG. 9 fragmentary sectional view of a modification of the embodiment, illustrating the mode switching unit being omitted, and the speed changing switch being at the first rotational speed position.
FIG. 10 is fragmentary sectional view of the modification of the embodiment, illustrating the speed changing switch being at the second rotational speed position.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

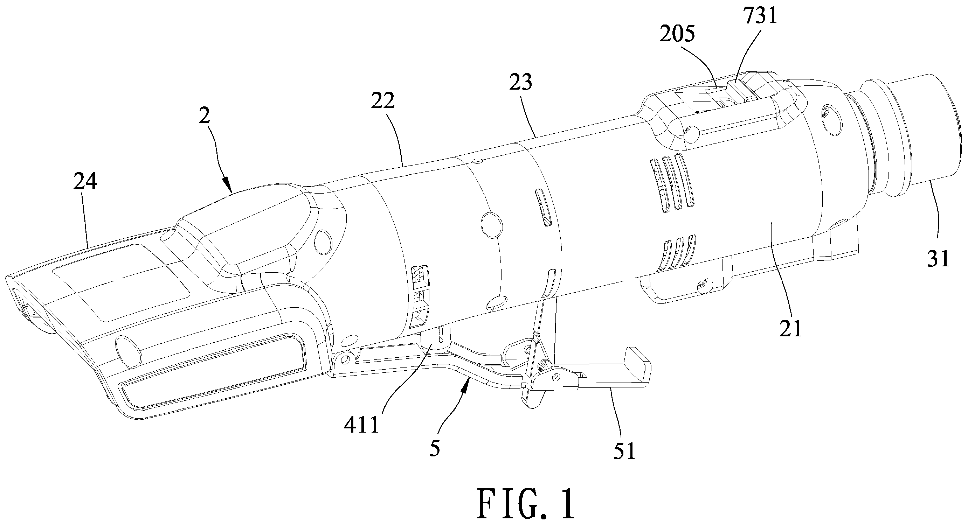

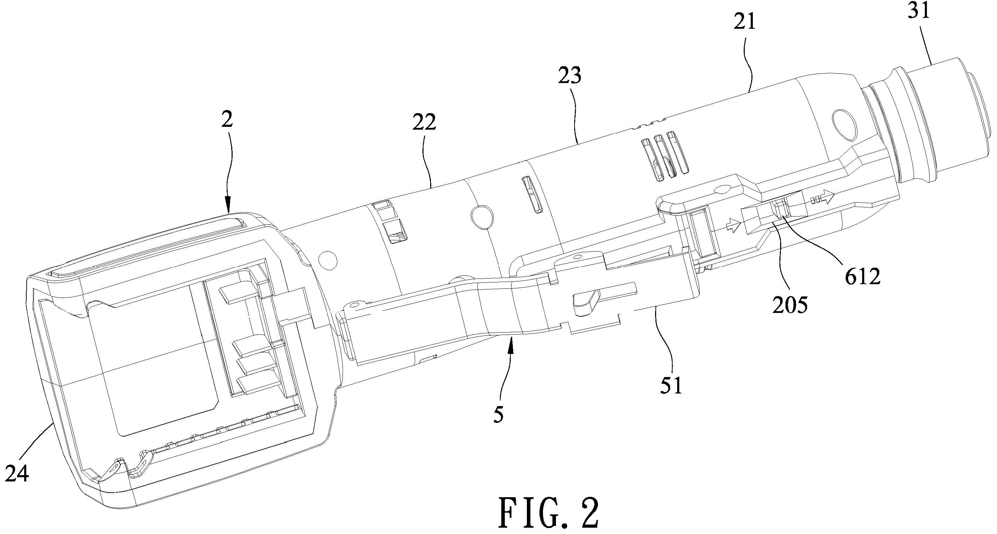

Referring to FIGS. 1 to 4, an embodiment of a powered tool according to the present disclosure for repairing a tire is shown. The powered tool includes a housing unit 2, an electric power unit 3, a control unit 4, a trigger unit 5, a speed switching unit 6, and a mode switching unit 7.

The housing unit 2 extends along an axis (X). The housing unit 2 includes a front seat section 21 surrounding the axis (X) and defining a speed changing chamber 201, a rear seat section 22 surrounding the axis (X) and defining a control unit receiving chamber 202, an intermediate seat body 23 connected between the front seat section 21 and the rear seat section 22, an electrical receptacle body 24 connected to the rear seat section 22 and adapted to be electrically connected to a power source such as a battery (not shown), and two coupling portions 25. The intermediate seat body 23 surrounds the axis (X), and defines a power unit receiving chamber 203 that is in spatial communication with the speed changing chamber 201 and the control unit receiving chamber 202. The housing unit 2 defines two slide spaces 204 opposite to each other and spaced apart from the axis (X) in a direction parallel to a radial line (Y) that is substantially perpendicular to the axis (X), and two openings 205 respectively corresponding in position to the slide spaces 204. In this embodiment, one of the slide spaces 204 is formed in the front seat section 21, and another one of the slide spaces 204 is formed between the front seat section 21 and the intermediate seat body 23. Each of the openings 205 extends along the axis (X), and is in spatial communication with the respective one of the slide spaces 204 and external environment. The coupling portions 25 are formed between the front seat section 21 and the intermediate seat body 23, and are disposed in the another one of the slide spaces 204. In this embodiment, the coupling portions 25 are spaced apart from each other along the axis (X) and are opposite to each other along the radial line (Y).

The electric power unit 3 is mounted to the housing unit 2, and includes a motor 32 disposed in the power unit receiving chamber 203 and for converting electrical energy into kinetic energy, and a driven shaft 31 rotatable and adapted to output kinetic energy. In this embodiment, the driven shaft 31 is rotatably connected to the front seat section 21 and is for outputting kinetic energy transmitted from the motor 32. The motor 32 includes a rotating member 321 that is rotatable and that drives rotation of the driven shaft 31. The rear seat section 22 is distal from the driven shaft 31 along the axis (X).

The control unit 4 is disposed in the control unit receiving chamber 202 of the housing unit 2, and includes an actuating switch 41, and a processing module 42 electrically connected to the actuating switch 41 and the motor 32. The actuating switch 41 includes an actuator 411 extending outwardly of the rear seat section 22 of the housing unit 2, and movable in a direction of the radial line (Y). The actuating switch 41 is operable to output an actuated signal (S) associated with a movement distance of the actuator 411. The processing module 42 is configured to control rotation of the rotating member 321 of the motor 32 at a first rotational speed or a second rotational speed according to the actuated signal (S). In this embodiment, the processing module 42 is configured to control, according to the actuated signal (S), an amount of electricity supplied to the motor 32, or to perform a pulse-width modulation (PWM) to thereby adjusting the rotational speed of the rotating member 321. It should be noted that the processing module 42 is a microcontroller or a controller such as, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

The trigger unit 5 is mounted to the rear seat section 22 of the housing unit 2, and includes a trigger 51 operable to actuate movement of the actuator 411. In this embodiment, the trigger 51 is connected pivotally to the rear seat section 22 and is operable to contact and push the actuator 411.

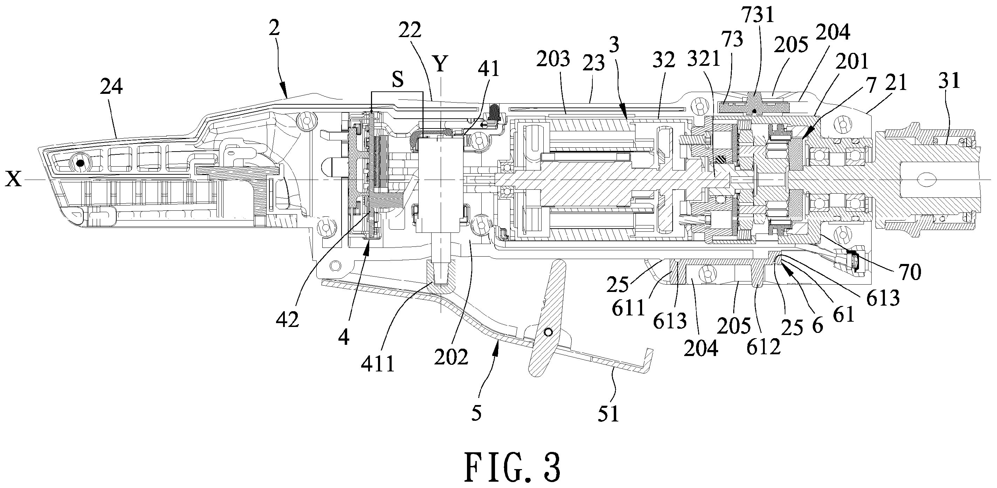

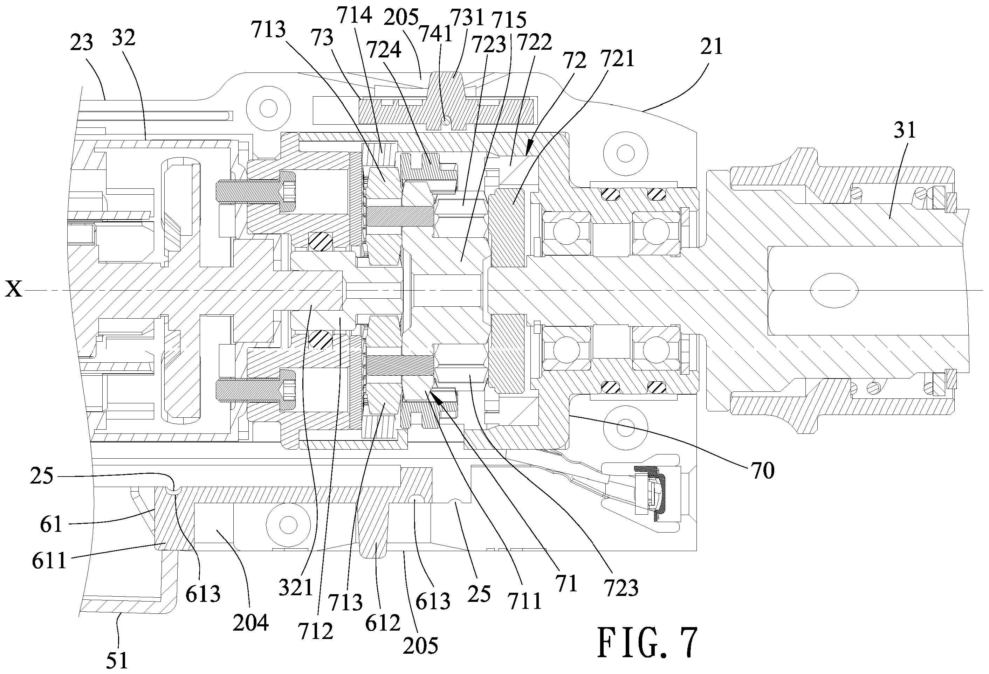

The speed switching unit 6 is mounted on the housing unit 2, and includes a speed changing switch 61 movable relative to the housing unit 2 in the other one of the slide spaces 204 along the axis (X). The speed changing switch 61 is operable to move relative to the trigger 51 between a first rotational speed position and a second rotational speed position, and has an abutment portion 611, an operating portion 612, and two engaging portions 613. The abutment portion 611 is proximate to the trigger 51 and extends in a direction parallel to the radial line (Y). The operating portion 612 is opposite to the abutment portion 611 along the axis (X) and is accessible to move the speed changing switch 61 between the first rotational speed position and the second rotational speed position. The engaging portions 613 are respectively complementary in shape with the coupling portions 25. Each of the coupling portions 25 may be one of a recess and a protrusion, and the respective one of the engaging portions 613 may be another one of the recess and the protrusion. The operating portion 612 extends through a lower one of the openings 205 shown in FIG. 7 in a direction parallel to the radial line (Y) and projects outwardly of the speed changing chamber 201 of the front seat section 21 of the housing unit 2. In this embodiment, the engaging portions 613 are recesses, and the coupling portions 25 are protrusions. One of the engaging portions 613 that is adjacent to the operating portion 612 faces one of the coupling portions 25 that is complementary in shape therewith. Another one of the engaging portions 613 that is adjacent to the abutment portion 611 faces another one of the coupling portions 25 that is complementary in shape therewith. As shown in FIG. 3, when the one of the engaging portions 613 that is adjacent to the operating portion 612 engages the one of the coupling portions 25, the another one of the engaging portions 613 that is adjacent to the abutment portion 611 disengages the another one of the coupling portions 25, and vice versa.

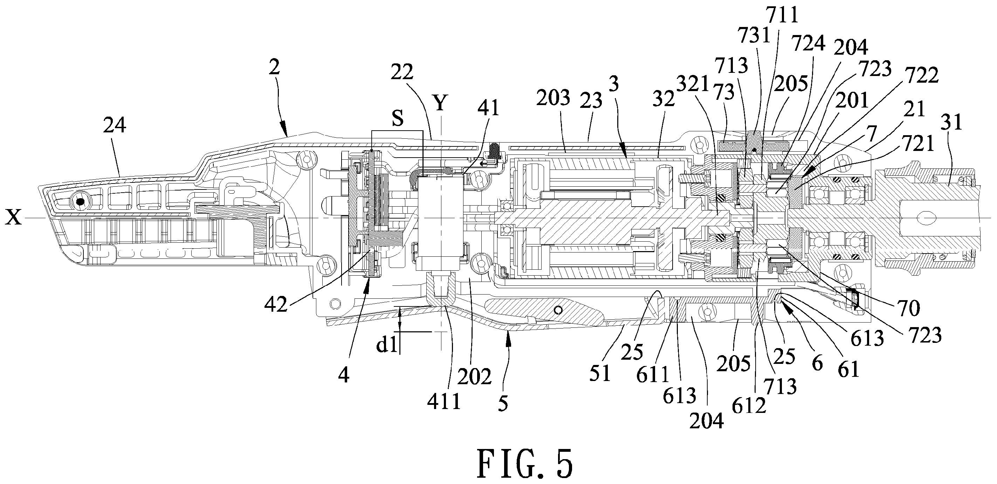

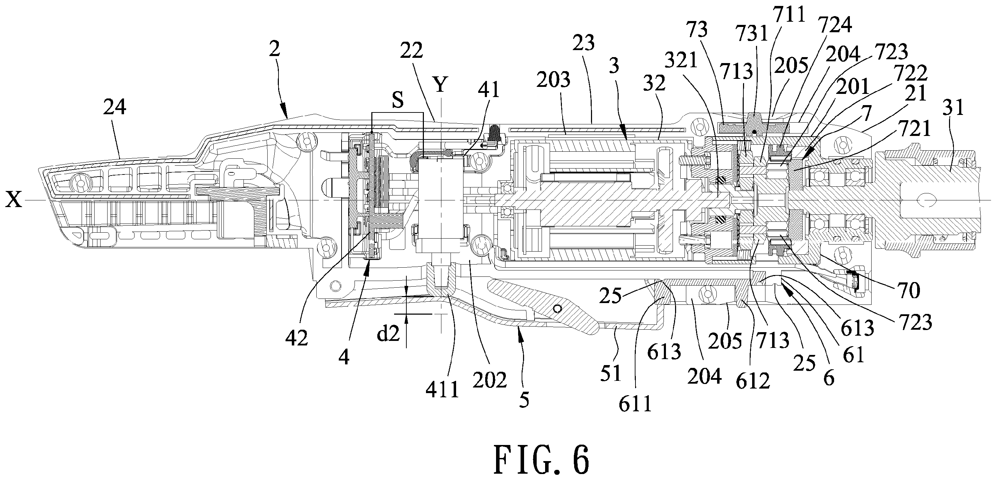

Referring to FIGS. 3, 5, 6 and 7, the speed changing switch 61 is movable relative to the trigger 51 between the first rotational speed position (see FIGS. 3 and 5) and the second rotational speed position (see FIGS. 6 and 7) along the axis (X). When the speed changing switch 61 is at the first rotational speed position, the speed changing switch 61 is distal from the trigger 51, one of the engaging portions 613 that is adjacent to the operating portion 612 engages the one of the coupling portions 25 so the speed changing switch 61 is positioned to be proximate to the driven shaft 31, such that the actuator 411travels a first distance (d1) from a position shown in FIG. 3 to another position shown in FIG. 5 as being pushed by the trigger 51. When the speed changing switch 61 is at the second rotational speed position, the speed changing switch 61 is adjacent to the trigger 51 and is disposed between the trigger 51 and the housing unit 2, another of the engaging portions 613 that is adjacent to the abutment portion 611 engages the another one of the coupling portions 25 so the speed changing switch 61 is positioned to be distal from the driven shaft 31, such that the actuator 411 travels a second distance (d2) that is less than the first distance (d1) as being pushed by the trigger 51.

Referring to FIGS. 3, 4 and 6 and 7, the mode switching unit 7 is mounted in the speed changing chamber 201 and is configured to transmit the kinetic energy from the motor 32 to the driven shaft 31. The mode switching unit 7 includes a ring seat 70 connected to the front seat section 21 and extending into in the speed changing chamber 201, a first gear set 71 and a second gear set 72 disposed in the ring seat 70 and in the speed changing chamber 201, a mode switching unit 73 slidable in the one of the slide spaces 204 along the axis (X), and a torsion spring 74 mounted on the ring seat 70.

The ring seat 70 surrounds the axis (X), and has an through hole 701.

The first gear set 71 has a first carrier 711 spaced apart from the rotating member 321 along the axis (X), a sun gear 712 sleeved on a portion of the rotating member 321 and co-rotatably connected to the rotating member 321, a plurality of first planet gears 713 rotatably connected to the first carrier 711 and meshing with the sun gear 712, and a ring gear 714 non-rotatable and meshing with the first planet gears 713. The first carrier 711 has a sun tooth 715 opposite to the first planet gears 713 along the axis (X).

The second gear set 72 has a second carrier 721 co-rotatably connected to the driven shaft 31, a toothed ring gear 722 connected to the ring seat 70 and surrounding the second carrier 721, a plurality of second planetary gears 723 rotatably connected to the second carrier 721 and meshing with the sun tooth 715, and a movable gear 724 surrounding and meshing with the second planetary gears 723.

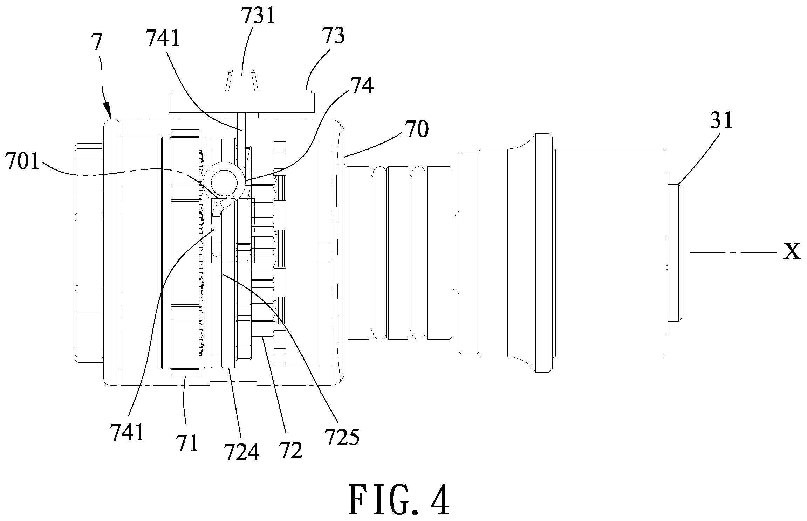

Referring to FIGS. 4 to 7, the movable gear 724 is annular, and has an annular groove 725 formed in an outer peripheral surface of the movable gear 724. The movable gear 724 is movable relative to the first gear set 71 along the axis (X) between a fixed position (see FIGS. 5 and 6) and a rotatable position (see FIG. 7). When the movable gear 724 is at the fixed position, the movable gear 724 is positioned, meshes with the toothed ring gear 722 and is not rotatable, and the second planetary gears 723 are rotatable relative to the movable gear 724 about the sun tooth 715, such that the mode switching unit 7 performs speed reduction at a first gear ratio. When the movable gear 724 is at the rotatable position, the movable gear 724 is rotatable, disengages and is spaced apart from the toothed ring gear 722 along the axis (X), and is driven by and rotates with the second planetary gears 723, such that the mode switching unit 7 performs speed reduction at a second gear ratio. In this embodiment, the movable gear 724 has internal gears.

The mode switching unit 73 has an accessible portion 731 extends through an upper one of the openings 205 shown in FIG. 7 in a direction parallel to the radial line (Y).

The torsion spring 74 is rotatably connected to the ring seat 70, and has two opposite end portions 741 respectively connected to the mode switching unit 73 and the annular groove 725 of the movable gear 724. When the accessible portion 731 of the mode switching unit 73 is moved toward the driven shaft 31 and drives one of the end portions 741 to move, the movable gear 724 is driven by another one of the end portions 741 to move in an opposite direction away from the driven shaft 31 to the rotatable position, and vice versa. It should be noted herein that the one of the end portions 741 extends through the through hole 701 and engages the annular groove 725 of the movable gear 724. As such, the movable gear 724 is moved by the torsion spring 74 along the axis (X), and may rotate relative to the torsion spring 74 without being interfered by the torsion spring 74.

As shown in FIGS. 3 and 5, after a user pushes the operating portion 612 of the speed changing switch 61 along the axis (X) to move the speed changing switch 61 to the first rotational speed position, the speed changing switch 61 is distal from the trigger 51 and does not limit movement of the trigger 51 toward the housing unit 2. As such, the trigger 51 may be operated to travel a relatively large distance, and the actuator 411 of the actuating switch 41 may be pushed by the trigger 51 to travel a relatively large movement distance. That is to say, the trigger 51 may press the actuator 411 of the actuating switch 41 to travel the first distance (d1), such that the actuating switch 41 outputs a first actuated signal (S1) according to the first distance (d1).

As shown in FIG. 6, after the user pushes the operating portion 612 to move the speed changing switch 61 to the second rotational speed position, the abutment portion 611 is adjacent to the trigger 51 and is disposed between the trigger 51 and the housing unit 2 to limit movement of the trigger 51 toward the housing unit 2 as the trigger 51 being pushed. Thus, the trigger 51 may be operated to travel a relatively small distance, and the actuator 411 of the actuating switch 41 may be pushed by the trigger 51 to travel a relatively small movement distance. That is to say, the trigger 51 may press the actuator 411 of the actuating switch 41 to travel the second distance (d2), such that the actuating switch 41 outputs a second actuated signal (S2) according to the second distance (d2).

In this way, the processing module 42 controls the rotating member 321 of the motor 32 to rotate at a first rotational speed and a second rotational speed according to the first actuated signal (S1) and the second actuated signal (S2), respectively.

When the movable gear 724 is at the fixed position and is not rotatable, and the rotating member 321 of the motor 32 rotates at one of the first rotational speed (see FIG. 5) and the second rotational speed (see FIG. 6), the first planet gears 713 driven by the sun gear 712 rotates relative to the movable gear 724 while revolving about the axis (X), and drive the first carrier 711 to rotate. At this time, the sun tooth 715 of the first carrier 711 is rotated to drive rotation of the second planetary gears 723 so that the second planetary gears 723 rotates relative to the movable gear 724 and revolves about the axis (X), and drive rotation of the second carrier 721. Thus, during rotation of the second carrier 721, the driven shaft 31 is driven to rotate at a first rotational output speed and a second rotational output speed that are respectively decelerated from the first rotational speed and the second rotational speed by the first gear ratio.

It should be noted that the user may operate the accessible portion 731 of the mode switching unit 73 along the axis (X) to move the movable gear 724 to the rotatable position through the torsion spring 74 when the speed changing switch 61 is at one of the first rotational speed position (not shown) and the second rotational speed position (see FIG. 7). At this position, the movable gear 724 disengages the toothed ring gear 722 and is driven by the second planetary gears 723 that is driven by the sun tooth 715 of the first carrier 711 to rotate about the axis (X), and the second planetary gears 723 drives rotation of the second carrier 721. Thus, during rotation of the second carrier 721, the driven shaft 31 is driven to rotate at a third rotational output speed and a fourth rotational output speed respectively decelerated from the first rotational speed and the second rotational speed by the second gear ratio.

As described above, the driven shaft 31 is driven to rotate at the first, second, third and fourth rotational output speeds by adjusting positions of the speed changing switch 61 and the mode switching unit 73, and may be connected to various tool heads (not shown) for cleaning, grinding, or polishing a damaged region of a tire to be repaired (not shown) to thereby facilitate repair and maintenance of the tire. For example, a patch (not shown) may be securely bonded to the damaged area of the tire.

It should be noted that, in the above descriptions, the positions of the speed changing switch 61 and the mode switching unit 73 are independently adjusted and may be adjusted together in some variations of the embodiment according to the present disclosure. For example, the speed changing switch 61 is co-movable with the mode switching unit 73 and thus the operation to the mode switching unit 73 along the axis (X) to the fixed position or the rotatable position drives movement of the speed changing switch 61 along the axis (X) to the first rotational speed position or the second rotational speed position.

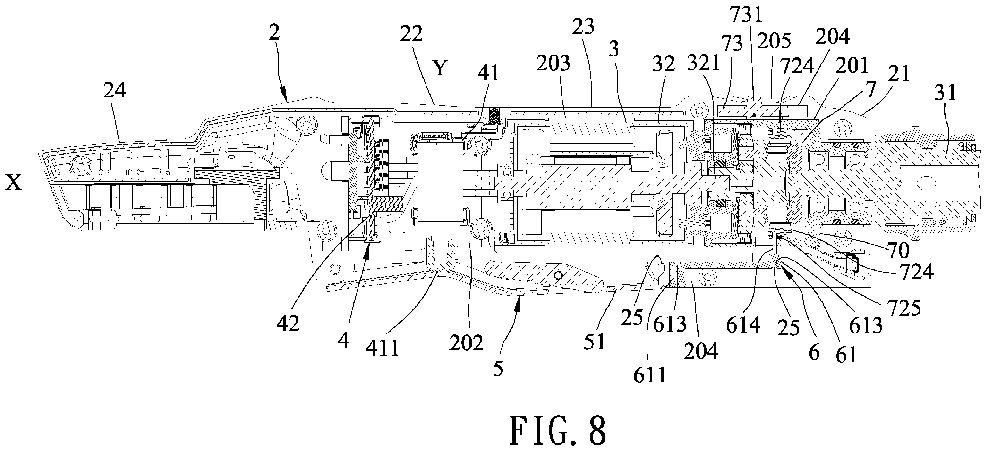

Referring to FIG. 8, a variation of the speed changing switch 61 is illustrated. In this variation, the speed changing switch 61 further has a linkage portion 614 extending toward the movable gear 724. The linkage portion 614 extends through the ring seat 70 and engages the annular groove 725 (not visible in FIG. 8) of the movable gear 724 such that the movable gear 724 is co-movable with the speed changing switch 61 along the axis (X) and is rotatable relative to the linkage portion 614 of the speed changing switch 61. Thus, the movable gear 724 and the speed changing switch 61 are both driven by movement of the mode switching unit 73 along the axis (X).

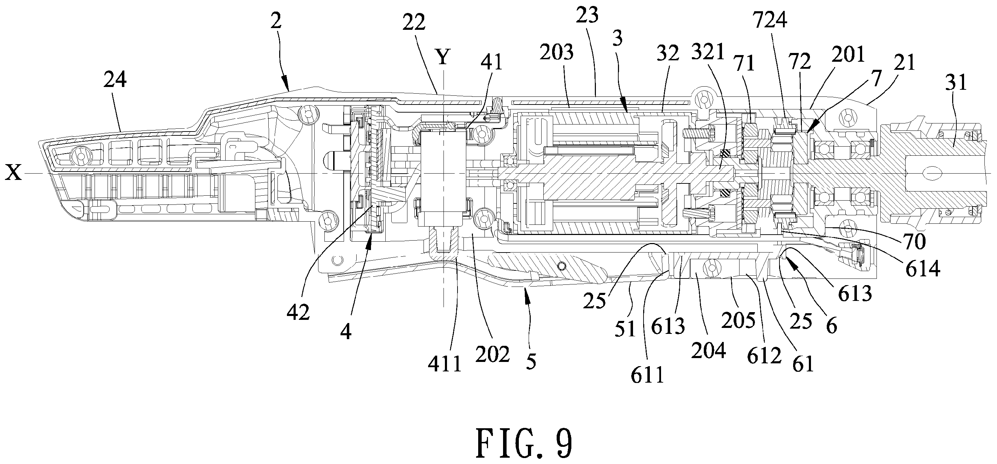

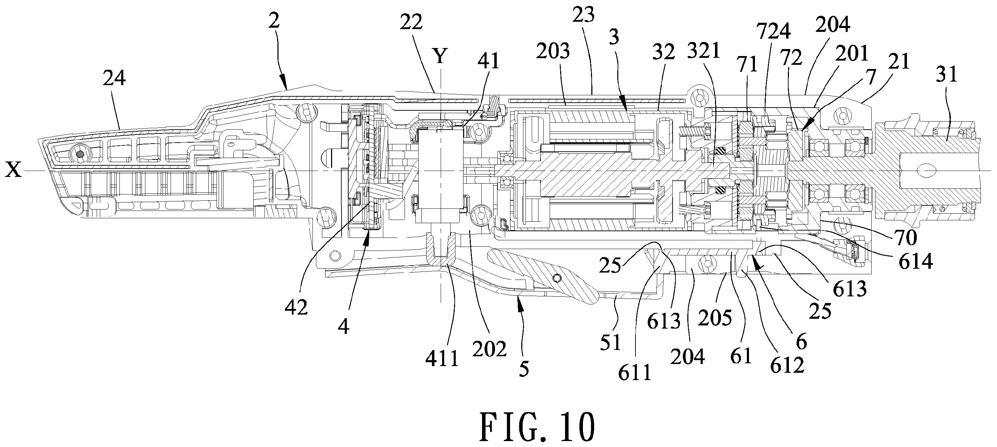

As described in the variation shown in FIG. 8, the present disclosure is not limited to independently change the speed changing switch 61 and the mode switching unit 73 to change rotational output speed of the driven shaft 31. For example, FIGS. 9 and 10 show a modification of the variation of the embodiment shown in FIG. 8, in which the mode switching unit 73 and the one of the slide spaces 204 shown in FIG. 8 are omitted. In this modification, movement of the speed changing switch 61 to the first rotational speed position or the second rotational speed position drives movement of the movable gear 724 through the linkage portion 614 to the fixed position or the rotatable position. In this modification, the mode switching unit 7 also performs speed reduction by the first gear ratio (see FIG. 9) and the second gear ratio (see FIG. 10) to drive rotation of the driven shaft 31 at the first rotational output speed and the fourth rotational output speed.

Through the above description, the advantages of the embodiment can be summarized as follows.

First, the gear ratio of the mode switching unit 7 may be changed through movement of the movable gear 724 along the axis (X). By virtue of the cooperation of the movements of the movable gear 724 and the speed changing switch 61, the driven shaft 31 of the present disclosure may be driven to rotate at first, second, third and fourth rotational output speeds, thereby providing more rotational output speeds without a use of an electronic speed control system. In addition, connections among the trigger unit 5 and the speed switching unit 6 are simple mechanical structures and are thus not susceptible to loosen easily, which improves reliability of the powered tool of the present disclosure.

Second, in the embodiment of the present disclosure, the mode switching unit 73 may be operated to drive movement of the speed changing switch 61 to the first rotational speed position and the second rotational speed position through the linkage portion 614 that engages the movable gear 724, so that distances that the trigger 51 and thus the actuator 411 may travel are changed.

Third, in a case where the mode switching unit 73 is omitted, the movable gear 724 may also be moved between the fixed position and the rotatable position by moving the speed changing switch 61 along the axis (X).

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A powered tool for repairing a tire, comprising:
a housing unit (2) that extends along an axis (X); and
an electric power unit (3) that is mounted to said housing unit (2) and that includes
a driven shaft (31) rotatable and adapted to output kinetic energy, and
a motor (32) for converting electrical energy into kinetic energy, and including a rotating member (321) that is rotatable and that drives rotation of said driven shaft (31);
said powered tool for repairing a tire **characterized in that**
a control unit (4) is mounted to said housing unit (2), and includes
an actuating switch (41) including an actuator (411) that is movable, said actuating switch (41) being operable to output an actuated signal (S) that is associated with a movement distance of said actuator (411), and
a processing module (42) electrically connected to said actuating switch (41) and said motor (32), and configured to control rotation of said rotating member (321) of said motor (32) at one of a first rotational speed and a second rotational speed according to the actuated signal (S);
a trigger unit (5) is mounted to said housing unit (2) and includes a trigger (51) operable to actuate movement of said actuator (411); and
a speed switching unit (6) is mounted on said housing unit (2) and includes a speed changing switch (61) operable to move relative to said trigger (51) between a first rotational speed position and a second rotational speed position, **characterized in that**
said speed changing switch (61) being distal from said trigger (51) when being at the first rotational speed position such that said actuator (411) travels a first distance (d1) as being pushed by said trigger (51), said speed changing switch (61) being adjacent to said trigger (51) and disposed between said trigger (51) and said housing unit (2) when being at the second rotational speed position such that said actuator (411) travels a second distance (d2) that is smaller than said first distance (d1) as being pushed by said trigger (51).

2. The powered tool as claimed in claim 1, wherein said speed changing switch (61) is movable relative to said housing unit (2) along the axis (X), and has:
an abutment portion (611) proximate to said trigger (51), said abutment portion (611) being in contact with said trigger (51), and disposed between said trigger (51) and said housing unit (2) when said speed changing switch (61) is at the second rotational speed position; and
an operating portion (612) opposite to said abutment portion (611) along the axis (X) and accessible to move said speed changing switch (61) between the first rotational speed position and the second rotational speed position.

3. The powered tool as claimed in claim 1 or 2, wherein said housing unit (2) includes:
a rear seat section (22) surrounding the axis (X), distal from said driven shaft (31), and defining a control unit receiving chamber (202) in which said control unit (4) is disposed; and
an intermediate seat body (23) surrounding the axis (X), connected to said rear seat section (22), and defining a power unit receiving chamber (203) in which said motor (32) is disposed.

4. The powered tool as claimed in any one of claims 1 to 3, wherein:
said housing unit (2) defines a slide space (204) spaced apart from the axis (X) in a direction parallel to a radial line (Y) that is substantially perpendicular to the axis (X), and an opening (205) extending along the axis (X) and in spatial communication with said slide space (204) and external environment;
said speed changing switch (61) is slidable in said slide space (204) along the axis (X);
said abutment portion (611) extends in a direction parallel to the radial line (Y); and
said operating portion (612) extends through said opening (205) in a direction parallel to the radial line (Y).

5. The powered tool as claimed in claim 4, wherein:
said housing unit (2) has two coupling portions (25) disposed in said slide space (204), spaced apart from each other along the axis (X), and opposite to each other along the radial line (Y),
said speed changing switch (61) further has two engaging portions (613) respectively complementary in shape with said coupling portions (25), one of said engaging portions (613) that is adjacent to said operating portion (612) engaging one of said coupling portions (25) when said speed changing switch (61) is at the first rotational speed position, another one of said engaging portions (613) that is adjacent to said abutment portion (611) engaging another one of said coupling portions (25) when said speed changing switch (61) is at the second rotational speed position.

6. The powered tool as claimed in any one of claims 1 to 5, further comprising:
a mode switching unit (7) that is configured to transmit kinetic energy from said motor (32) to said driven shaft (31), that is mounted to said housing unit (2), and that includes
a first gear set (71),and
a second gear set (72) including a movable gear (724) that is driven to move relative to said first gear set (71) along the axis (X) between a fixed position, where said movable gear (724) is positioned, and a rotatable position, where said movable gear (724) is rotatable.

7. The powered tool as claimed in claim 6, wherein said first gear set (71) has
a first carrier (711) spaced apart from said rotating member (321),
a sun gear (712) co-rotatably connected to said rotating member (321),
a plurality of first planet gears (713) rotatably connected to said first carrier (711) and meshing with said sun gear (712), and
a ring gear (714) non-rotatable and meshing with said first planet gears (713), said first carrier (711) having a sun tooth (715) opposite to said first planet gears (713) along the axis (X).

8. The powered tool as claimed in claim 6 or 7, wherein:
said movable gear (724) is annular;
said second gear set (72) further includes
a second carrier (721) co-rotatably connected to said driven shaft (31), and
a plurality of second planetary gears (723) rotatably connected to said second carrier (721), meshing with said sun tooth (715), and meshing with and surrounded by said movable gear (724), said second planetary gears (723) rotatable relative to the movable gear (724) about said sun tooth (715) when said movable gear (724) being at the fixed position where said movable gear (724) is non-rotatable; and
said movable gear (724) is driven by and rotating with said second planetary gears (723) when said movable gear (724) is at the rotatable position.

9. The powered tool as claimed in any one of claims 6 to 8, wherein:
said second gear set (72) further includes a toothed ring gear (722);
said movable gear (724) meshes with said toothed ring gear (722) and is not rotatable when being at the fixed position; and
said movable gear (724) disengages said toothed ring gear (722) along the axis (X) when being at the rotatable position.

10. The powered tool as claimed in any one of claims 6 to 9, wherein:
said housing unit (2) includes a front seat section (21) surrounding the axis (X) and defining a speed changing chamber (201);
said driven shaft (31) is rotatably connected to said front seat section (21); and
said first gear set (71) and said second gear set (72) of said mode switching unit (7) are disposed in said speed changing chamber (201).

11. The powered tool as claimed in any one of claims 6 to 10, wherein:
said housing unit (2) defines a slide space (204) spaced apart from said speed changing chamber (201) in a direction parallel to a radial line (Y) that is substantially perpendicular to the axis (X), and an opening (205) extending along the axis (X) and in spatial communication with said slide space (204) and external environment; and
said mode switching unit (7) further includes a mode switching unit (73) slidable in said slide space (204) along the axis (X), connected to said movable gear (724), and having an accessible portion (731) that extends through said opening (205) in a direction parallel to the radial line (Y).

12. The powered tool as claimed in any one of claims 6 to 11, wherein:
said mode switching unit (7) further includes
a ring seat (70) connected to said front seat section (21), extending into said speed changing chamber (201), and has a through hole (701), said first gear set (71) and said second gear set (72) being disposed in said ring seat (70), and
a torsion spring (74) mounted on said ring seat (70), having two opposite end portions (741) that respectively connected to said mode switching unit (73) and said movable gear (724); and
said movable gear (724) has an annular groove (725) formed in an outer peripheral surface of said movable gear (724) and engaging one of said end portions (741) that extends through said through hole (701) and that is connected to said movable gear (724).

13. The powered tool as claimed in any one of claims 6 to 10, wherein:
said speed changing switch (61) has a linkage portion (614) extending toward said movable gear (724);
said movable gear (724) has an annular groove (725) formed in an outer peripheral surface of said movable gear (724) and engaging said linkage portion (614); and
said movable gear (724) is co-movable with said speed changing switch (61) along the axis (X) and is rotatable relative to said linkage portion (614).

## Patentansprüche

1. Angetriebenes Werkzeug zum Reparieren eines Reifens mit:
einer Gehäuseeinheit (2), die sich entlang einer Achse (X) erstreckt; und
einer elektrische Leistungseinheit (3), die an der genannten Gehäuseeinheit (2) angebracht ist und Folgendes aufweist
eine Abtriebswelle (31), die drehbar ist und kinetische Energie abgeben kann, und
einen Motor (32) zur Umwandlung von elektrischer Energie in kinetische Energie, der ein Drehelement (321) aufweist, das die Drehung der Abtriebswelle (31) antreibt;
wobei das angetriebene Werkzeug zum Reparieren eines Reifens, **dadurch gekennzeichnet ist**
**dass** eine Steuereinheit (4) an der Gehäuseeinheit (2) angebracht ist und Folgendes aufweist
einen Betätigungsschalter (41) mit einem Betätigungselement (411), das beweglich ist, wobei der Betätigungsschalter (41) funktionsfähig ist, um ein Betätigungssignal (S) auszugeben, das mit einer Bewegungsstrecke des Betätigungselements (411) verbunden ist, und
ein Verarbeitungsmodul (42), das elektrisch mit dem Betätigungsschalter (41) und dem Motor (32) verbunden und so konfiguriert ist, dass es die Drehung des Drehelements (321) des Motors (32) mit einer ersten Drehgeschwindigkeit oder einer zweiten Drehgeschwindigkeit entsprechend dem Betätigungssignal (S) steuert;
wobei eine Auslöseeinheit (5) an der Gehäuseeinheit (2) angebracht ist und einen Auslöser (51) aufweist, der betätigt werden kann, um die Bewegung des Betätigungselements (411) auszulösen; und
eine Drehzahlumschalteinheit (6) an der Gehäuseeinheit (2) angebracht ist und einen Drehzahländerungsschalter (61) aufweist, der funktionsfähig ist, um sich relativ zu dem Auslöser (51) zwischen einer ersten Drehgeschwindigkeitsposition und einer zweiten Drehgeschwindigkeitsposition zu bewegen, **dadurch gekennzeichnet**
**dass** der Drehzahländerungsschalter (61) von dem Auslöser (51) distanziert ist,
wenn er sich in der ersten Drehgeschwindigkeitsposition befindet, so dass das Betätigungselement (411) eine erste Strecke (d1) zurücklegt, wenn es von dem Auslöser (51) geschoben wird, wobei der Drehzahländerungsschalter (61) an den Auslöser (51) angrenzt und zwischen dem Auslöser (51) und der Gehäuseeinheit (2) angeordnet ist, wenn er sich in der zweiten Drehgeschwindigkeitsposition befindet, so dass das Betätigungselement (411) eine zweite Strecke (d2) zurücklegt, die kleiner ist als die erste Strecke (d1), wenn es von dem Auslöser (51) geschoben wird.

2. Angetriebenes Werkzeug nach Anspruch 1, wobei der Drehzahländerungsschalter (61) relativ zu der Gehäuseeinheit (2) entlang der Achse (X) beweglich ist und Folgendes aufweist:
einen Anschlagabschnitt (611) in der Nähe des Auslösers (51), wobei der Anschlagabschnitt (611) in Kontakt mit dem Auslöser (51) steht und zwischen dem Auslöser (51) und der Gehäuseeinheit (2) angeordnet ist, wenn sich der Drehzahländerungsschalter (61) in der zweiten Drehgeschwindigkeitsposition befindet; und
einen Betätigungsabschnitt (612), der dem Anschlagabschnitt (611) entlang der Achse (X) gegenüberliegt und zugänglich ist, um den Drehzahländerungsschalter (61) zwischen der ersten Drehgeschwindigkeitsposition und der zweiten Drehgeschwindigkeitsposition zu bewegen.

3. Angetriebenes Werkzeug nach Anspruch 1 oder 2, wobei die Gehäuseeinheit (2) Folgendes aufweist:
einen hinteren Sitzabschnitt (22), der die Achse (X) umgibt, von der Abtriebswelle (31) distanziert ist und eine Steuereinheit-Aufnahmekammer (202) definiert, in der die Steuereinheit (4) angeordnet ist; und
einen Zwischensitzkörper (23), der die Achse (X) umgibt, mit dem hinteren Sitzabschnitt (22) verbunden ist und eine Leistungseinheit-Aufnahmekammer (203) definiert, in welcher der Motor (32) angeordnet ist.

4. Angetriebenes Werkzeug nach einem der Ansprüche 1 bis 3, wobei:
die Gehäuseeinheit (2) einen Gleitraum (204) definiert, der von der Achse (X) in einer Richtung parallel zu einer Radiallinie (Y) beabstandet ist, die im Wesentlichen senkrecht zu der Achse (X) ist, und eine Öffnung (205), die sich entlang der Achse (X) erstreckt und in räumlicher Verbindung mit dem Gleitraum (204) und der äußeren Umgebung steht;
der Drehzahländerungsschalter (61) in dem Gleitraum (204) entlang der Achse (X) verschiebbar ist;
der Anschlagabschnitt (611) sich in einer Richtung parallel zur Radiallinie (Y) erstreckt; und
der Betätigungsabschnitt (612) sich durch die Öffnung (205) in einer Richtung parallel zur Radiallinie (Y) erstreckt.

5. Angetriebenes Werkzeug nach Anspruch 4, wobei:
die Gehäuseeinheit (2) zwei in dem Gleitraum (204) angeordnete Kupplungsabschnitte (25) aufweist, die entlang der Achse (X) voneinander beabstandet sind und entlang der Radiallinie (Y) einander gegenüberliegen,
der Drehzahländerungsschalter (61) ferner zwei Eingriffsabschnitte (613) aufweist, die jeweils komplementär zu den Kupplungsabschnitten (25) geformt sind, wobei einer der Eingriffsabschnitte (613), der an den Betätigungsabschnitt (612) angrenzt, in einen der Kupplungsabschnitte (25) eingreift, wenn sich der Drehzahländerungsschalter (61) in der ersten Drehgeschwindigkeitsposition befindet, und ein anderer der Eingriffsabschnitte (613), der an den Anschlagabschnitt (611) angrenzt, in einen anderen der Kupplungsabschnitte (25) eingreift, wenn sich der Drehzahländerungsschalter (61) in der zweiten Drehgeschwindigkeitsposition befindet.

6. Angetriebenes Werkzeug nach einem der Ansprüche 1 bis 5, welches ferner Folgendes aufweist:
eine Betriebsartumschalteinheit (7), die so konfiguriert ist, dass sie kinetische Energie von dem Motor (32) auf die Abtriebswelle (31) überträgt, die an der Gehäuseeinheit (2) angebracht ist, und die Folgendes aufweist
einen ersten Zahnradsatz (71), und
einen zweiten Zahnradsatz (72), der ein bewegliches Zahnrad (724) enthält, das angetrieben wird, um sich relativ zu dem ersten Zahnradsatz (71) entlang der Achse (X) zwischen einer festen Position, in der das bewegliche Zahnrad (724) positioniert ist, und einer drehbaren Position, in der das bewegliche Zahnrad (724) drehbar ist, zu bewegen.

7. Angetriebenes Werkzeug nach Anspruch 6, wobei der erste Zahnradsatz (71) Folgendes aufweist einen ersten Träger (711), der von dem Drehelement (321) beabstandet ist,
ein Sonnenrad (712), das mit dem Drehelement (321) drehbar verbunden ist,
eine Vielzahl von ersten Planetenrädern (713), die drehbar mit dem ersten Träger (711) verbunden sind und mit dem Sonnenrad (712) einspuren, und
ein Hohlrad (714), das nicht drehbar ist und mit den ersten Planetenrädern (713) einspurt,
wobei der erste Träger (711) einen Sonnenzahn (715) aufweist, der den ersten Planetenrädern (713) entlang der Achse (X) gegenüberliegt.

8. Angetriebenes Werkzeug nach Anspruch 6 oder 7, wobei:
das bewegliche Zahnrad (724) ringförmig ist;
der zweite Zahnradsatz (72) ferner Folgendes aufweist
einen zweiten Träger (721), der mit der Abtriebswelle (31) drehbar verbunden ist, und
eine Vielzahl von zweiten Planetenrädern (723), die drehbar mit dem zweiten Träger (721) verbunden sind, mit dem Sonnenzahn (715) einspuren und mit dem beweglichen Zahnrad (724) einspuren und von diesem umgeben sind, wobei die zweiten Planetenräder (723) relativ zu dem beweglichen Zahnrad (724) um den Sonnenzahn (715) drehbar sind, wenn sich das bewegliche Zahnrad (724) in der festen Position befindet, in der das bewegliche Zahnrad (724) nicht drehbar ist; und
wobei das bewegliche Zahnrad (724) durch das zweite Planetengetriebe (723) angetrieben wird und sich mit diesem dreht, wenn sich das bewegliche Zahnrad (724) in der drehbaren Position befindet.

9. Angetriebenes Werkzeug nach einem der Ansprüche 6 bis 8, wobei:
der zweite Zahnradsatz (72) ferner ein gezahntes Hohlrad (722) aufweist;
das bewegliche Zahnrad (724) mit dem gezahnten Hohlrad (722) einspurt und in der festen Position nicht drehbar ist; und
das bewegliche Zahnrad (724) das gezahnte Hohlrad (722) entlang der Achse (X) außer Eingriff bringt, wenn es sich in der drehbaren Position befindet.

10. Angetriebenes Werkzeug nach einem der Ansprüche 6 bis 9, wobei:
die Gehäuseeinheit (2) einen vorderen Sitzabschnitt (21) aufweist, der die Achse (X) umgibt und eine Drehzahländerungskammer (201) definiert;
die Abtriebswelle (31) drehbar mit dem vorderen Sitzabschnitt (21) verbunden ist; und
und
der erste Zahnradsatz (71) und der zweite Zahnradsatz (72) der Betriebsartumschalteinheit (7) in der Drehzahländerungskammer (201) angeordnet sind.

11. Angetriebenes Werkzeug nach einem der Ansprüche 6 bis 10, wobei:
die Gehäuseeinheit (2) einen Gleitraum (204) definiert, der von der Drehzahländerungskammer (201) in einer Richtung parallel zu einer Radiallinie (Y) beabstandet ist, die im Wesentlichen senkrecht zu der Achse (X) ist, und eine Öffnung (205), die sich entlang der Achse (X) erstreckt und in räumlicher Verbindung mit dem Gleitraum (204) und der äußeren Umgebung steht; und
die Betriebsartumschalteinheit (7) ferner eine Betriebsartumschalteinheit (73) aufweist, die in dem Gleitraum (204) entlang der Achse (X) verschiebbar ist, mit dem beweglichen Zahnrad (724) verbunden ist und einen zugänglichen Abschnitt (731) aufweist, der sich durch die Öffnung (205) in einer Richtung parallel zu der Radiallinie (Y) erstreckt.

12. Angetriebenes Werkzeug nach einem der Ansprüche 6 bis 11, wobei:
die Betriebsartumschalteinheit (7) ferner Folgendes aufweist
einen Ringsitz (70), der mit dem vorderen Sitzabschnitt (21) verbunden ist, sich in die Drehzahländerungskammer (201) erstreckt und ein Durchgangsloch (701) aufweist, wobei der erste Zahnradsatz (71) und der zweite Zahnradsatz (72) in dem Ringsitz (70) angeordnet sind, und
eine Torsionsfeder (74), die auf dem Ringsitz (70) montiert ist und zwei gegenüberliegende Endabschnitte (741) aufweist, die jeweils mit der Betriebsartumschalteinheit (73) und dem beweglichen Zahnrad (724) verbunden sind; und
das bewegliche Zahnrad (724) eine ringförmige Nut (725) aufweist, die in einer äußeren Umfangsfläche des beweglichen Zahnrads (724) ausgebildet ist und in einen der Endabschnitte (741) eingreift, der sich durch das Durchgangsloch (701) erstreckt und mit dem beweglichen Zahnrad (724) verbunden ist.

13. Angetriebenes Werkzeug nach einem der Ansprüche 6 bis 10, wobei: der Drehzahländerungsschalter (61) einen Verbindungsabschnitt (614) aufweist, der sich in Richtung des beweglichen Zahnrads (724) erstreckt;
das bewegliche Zahnrad (724) eine ringförmige Nut (725) aufweist, die in einer äußeren Umfangsfläche des beweglichen Zahnrads (724) ausgebildet ist und in den Verbindungsabschnitt (614) eingreift; und
das bewegliche Zahnrad (724) zusammen mit dem Drehzahländerungsschalter (61) entlang der Achse (X) beweglich ist und relativ zu dem Verbindungsabschnitt (614) drehbar ist.

## Revendications

1. Outil motorisé pour réparer un pneu, comprenant :
une unité de boîtier (2) qui s'étend le long d'un axe (X) ; et
une unité d'alimentation électrique (3) qui est montée sur ladite unité de boîtier (2) et qui comprend :
un arbre entraîné (31) rotatif et adapté pour produire de l'énergie cinétique, et
un moteur (32) pour convertir l'énergie électrique en énergie cinétique, et comprenant un élément rotatif (321) qui peut tourner et qui entraîne la rotation dudit arbre entraîné (31) ;
ledit outil motorisé pour réparer un pneu étant **caractérisé en ce que** :
une unité de commande (4) est montée sur ladite unité de boîtier (2) et comprend :
un commutateur d'actionnement (41) comprenant un actionneur (411) qui est mobile, ledit commutateur d'actionnement (41) étant opérationnel pour produire un signal actionné (S) qui est associé à une distance de déplacement dudit actionneur (411), et
un module de traitement (42) électriquement raccordé audit commutateur d'actionnement (41) et audit moteur (32) et configuré pour commander la rotation dudit élément rotatif (321) dudit moteur (32) à l'une parmi une première vitesse de rotation et une deuxième vitesse de rotation selon le signal actionné (S) ;
une unité de déclenchement (5) est montée sur ladite unité de boîtier (2) et comprend un déclencheur (51) opérationnel pour actionner le déplacement dudit actionneur (411) ; et
une unité de commutation de vitesse (6) est montée sur ladite unité de boîtier (2) et comprend un commutateur de changement de vitesse (61) opérationnel pour se déplacer par rapport audit déclencheur (51) entre une première position de vitesse de rotation et une deuxième position de vitesse de rotation, **caractérisé en ce que** :
ledit commutateur de changement de vitesse (61) étant distal dudit déclencheur (51) lorsqu'il est dans la première position de vitesse de rotation de sorte que ledit actionneur (411) parcourt une première distance (d1) lorsqu'il est poussé par ledit déclencheur (51), ledit commutateur de changement de vitesse (61) étant adjacent audit déclencheur (51) et disposé entre ledit déclencheur (51) et ladite unité de boîtier (2) lorsqu'il est dans la deuxième position de vitesse de rotation de sorte que ledit actionneur (411) parcourt une deuxième distance (d2) qui est inférieure à ladite première distance (d1) lorsqu'il est poussé par ledit déclencheur (51).

2. Outil motorisé selon la revendication 1, dans lequel ledit commutateur de changement de vitesse (61) est mobile par rapport à ladite unité de boîtier (2) le long de l'axe (X), et a :
une partie de butée (611) à proximité dudit déclencheur (51), ladite partie de butée (611) étant en contact avec ledit déclencheur (51) et disposée entre ledit déclencheur (51) et ladite unité de boîtier (2), lorsque ledit commutateur de changement de vitesse (61) est dans la deuxième position de vitesse de rotation ; et
une partie opérationnelle (612) opposée à ladite partie de butée (611) le long de l'axe (X) et accessible pour déplacer ledit commutateur de changement de vitesse (61) entre la première position de vitesse de rotation et la deuxième position de vitesse de rotation.

3. Outil motorisé selon la revendication 1 ou 2, dans lequel ladite unité de boîtier (2) comprend :
une section de siège arrière (22) entourant l'axe (X), distale par rapport audit arbre entraîné (31) et définissant une chambre de réception d'unité de commande (202) dans laquelle est disposée ladite unité de commande (4) ; et
un corps de siège intermédiaire (23) entourant l'axe (X), raccordé à ladite section de siège arrière (22) et définissant une chambre de réception d'unité d'alimentation (203) dans laquelle est disposé ledit moteur (32).

4. Outil motorisé selon l'une quelconque des revendications 1 à 3, dans lequel :
ladite unité de boîtier (2) définit un espace de coulissement (204) espacé de l'axe (X) dans une direction parallèle à une ligne radiale (Y) qui est sensiblement perpendiculaire à l'axe (X), et une ouverture (205) s'étendant le long de l'axe (X) et en communication spatiale avec ledit espace de coulissement (204) et l'environnement extérieur ;
ledit commutateur de changement de vitesse (61) peut coulisser dans ledit espace de coulissement (204) le long de l'axe (X) ;
ladite partie de butée (611) s'étend dans une direction parallèle à la ligne radiale (Y) ; et
ladite partie opérationnelle (612) s'étend à travers ladite ouverture (205) dans une direction parallèle à la ligne radiale (Y).

5. Outil motorisé selon la revendication 4, dans lequel :
ladite unité de boîtier (2) a deux parties de couplage (25) disposées dans ledit espace de coulissement (204), espacées l'une de l'autre le long de l'axe (X) et opposées entre elles le long de la ligne radiale (Y),
ledit commutateur de changement de vitesse (61) a en outre deux parties de mise en prise (613) respectivement de forme complémentaire avec lesdites parties de couplage (25), l'une desdites parties de mise en prise (613) qui est adjacente à ladite partie opérationnelle (612) mettant en prise l'une desdites parties de couplage (25), lorsque ledit commutateur de changement de vitesse (61) est dans la première position de vitesse de rotation, une autre desdites parties de mise en prise (613) qui est adjacente à ladite partie de butée (611) mettant en prise une autre desdites parties de couplage (25), lorsque ledit commutateur de changement de vitesse (61) est dans la deuxième position de vitesse de rotation.

6. Outil motorisé selon l'une quelconque des revendications 1 à 5, comprenant en outre :
une unité de commutation de mode (7) qui est configurée pour transmettre l'énergie cinétique dudit moteur (32) audit arbre entraîné (31), qui est monté sur ladite unité de boîtier (2) et qui comprend :
un premier train d'engrenages (71), et
un deuxième train d'engrenages (72) comprenant un engrenage mobile (724) qui est entraîné pour se déplacer par rapport audit premier train d'engrenages (71) le long de l'axe (X) entre une position fixe, où ledit engrenage mobile (724) est positionné, et une position rotative où ledit engrenage mobile (724) peut tourner.

7. Outil motorisé selon la revendication 6, dans lequel ledit premier train d'engrenages (71) a un premier support (711) espacé dudit élément rotatif (321), un planétaire (712) raccordé, par co-rotation, audit élément rotatif (321), une pluralité de premiers engrenages planétaires (713) raccordés, en rotation, audit premier support (711) et s'engrenant avec ledit planétaire (712), et
une couronne (714) non rotative et s'engrenant avec lesdits premiers engrenages planétaires (713), ledit premier support (711) ayant une dent de planétaire (715) opposée auxdits premiers engrenages planétaires (713) le long de l'axe (X).

8. Outil motorisé selon la revendication 6 ou 7, dans lequel :
ledit engrenage mobile (724) est annulaire ;
ledit deuxième train d'engrenages (72) comprend en outre :
un deuxième support (721) raccordé, par co-rotation, audit arbre entraîné (31), et
une pluralité de deuxièmes engrenages planétaires (723) raccordés, en rotation, audit deuxième support (721), s'engrenant avec ladite dent de planétaire (715), et s'engrenant avec et entourés par ledit engrenage mobile (724), lesdits deuxièmes engrenages planétaires (723) pouvant tourner par rapport à l'engrenage mobile (724) autour de ladite dent de planétaire (715) lorsque ledit engrenage mobile (724) est dans la position fixe où ledit engrenage mobile (724) ne tourne pas ; et
ledit engrenage mobile (724) est entraîné par et tourne avec lesdits deuxièmes engrenages planétaires (723) lorsque ledit engrenage mobile (724) est dans la position de rotation.

9. Outil motorisé selon l'une quelconque des revendications 6 à 8, dans lequel :
ledit deuxième train d'engrenages (72) comprend en outre une couronne dentée (722) ;
ledit engrenage mobile (724) s'engrène avec ladite couronne dentée (722) et ne peut pas tourner lorsqu'il est dans la position fixe ; et
ledit engrenage mobile (724) dégage ladite couronne dentée (722) le long de l'axe (X) lorsqu'il est dans la position de rotation.

10. Outil motorisé selon l'une quelconque des revendications 6 à 9, dans lequel :
ladite unité de boîtier (2) comprend une section de siège avant (21) entourant l'axe (X) et définissant une chambre de changement de vitesse (201) ;
ledit arbre entraîné (31) est raccordé, en rotation, à ladite section de siège avant (21) ; et
ledit premier train d'engrenages (71) et ledit deuxième train d'engrenages (72) de ladite unité de commutation de mode (7) sont disposés dans ladite chambre de changement de vitesse (201).

11. Outil motorisé selon l'une quelconque des revendications 6 à 10, dans lequel :
ladite unité de boîtier (2) définit un espace de coulissement (204) espacé de ladite chambre de changement de vitesse (201) dans une direction parallèle à une ligne radiale (Y) qui est sensiblement perpendiculaire à l'axe (X), et une ouverture (205) s'étendant le long de l'axe (X) et en communication spatiale avec ledit espace de coulissement (204) et l'environnement extérieur ; et
ladite unité de commutation de mode (7) comprend en outre une unité de commutation de mode (73) pouvant coulisser dans ledit espace de coulissement (204) le long de l'axe (X), raccordée audit engrenage mobile (724), et ayant une partie accessible (731) qui s'étend à travers ladite ouverture (205) dans une direction parallèle à la ligne radiale (Y).

12. Outil motorisé selon l'une quelconque des revendications 6 à 11, dans lequel :
ladite unité de commutation de mode (7) comprend en outre :
un siège annulaire (70) raccordé à ladite section de siège avant (21), s'étendant dans ladite chambre de changement de vitesse (201), et a un trou débouchant (701), ledit premier train d'engrenages (71) et ledit deuxième train d'engrenages (72) étant disposés dans ledit siège annulaire (70) ; et
un ressort de torsion (74) monté sur ledit siège annulaire (70), ayant deux parties d'extrémité (741) opposées qui sont respectivement raccordées à ladite unité de commutation de mode (73) et audit engrenage mobile (724) ; et
ledit engrenage mobile (724) a une rainure annulaire (725) formée dans une surface périphérique externe dudit engrenage mobile (724) et mettant en prise l'une desdites parties d'extrémité (741) qui s'étend à travers ledit trou débouchant (701) et qui est raccordée audit engrenage mobile (724).

13. Outil motorisé selon l'une quelconque des revendications 6 à 10, dans lequel :
ledit commutateur de changement de vitesse (61) a une partie de liaison (614) s'étendant vers ledit engrenage mobile (724) ;
ledit engrenage mobile (724) a une rainure annulaire (725) formée dans une surface périphérique externe dudit engrenage mobile (724) et mettant en prise ladite partie de liaison (614) ; et
ledit engrenage mobile (724) est mobile conjointement avec ledit commutateur de changement de vitesse (61) le long de l'axe (X) et peut tourner par rapport à ladite partie de liaison (614).
